# EUROPEAN PATENT APPLICATION

(11) **EP 4 746 372 A1**
(43) Date of publication of application: **20.05.2026**
(21) Application number: 24839808.3
(22) Date of filing: 11.07.2024
(51) Int. Cl.: H04L 61/2592, H04L 12/52

(54) **COMMUNICATION DEVICE AND COMMUNICATION SYSTEM**

(30) Priority: 11.07.2023 US 202363513001 P; 27.06.2024 US 202418757099
(71) Applicant: Sony Semiconductor Solutions Corporation, Atsugi-shi, Kanagawa 243-0014 (JP)
(72) Inventor: HYAKUDAI, Toshihisa, Paramus, New Jersey 07652 (US); YAMADA, Junya, Atsugi-shi, Kanagawa 243-0014 (JP); OTA, Satoshi, Atsugi-shi, Kanagawa 243-0014 (JP); HIRAOKA, Tetsuya, Atsugi-shi, Kanagawa 243-0014 (JP)
(74) Representative: MFG Patentanwälte Meyer-Wildhagen Meggle-Freund Gerhard PartG mbB
(86) International application number: PCT/JP2024/025061
(87) International publication number: WO 2025/013918

(57) **Abstract**

A plurality of different types of packets having different structures conforming to CSI-2 standards of MIPI is efficiently transmitted at high speed.

A communication apparatus includes a packet generation unit configured to encapsulate a packet conforming to camera serial interface 2 (CSI-2) standards defined by camera service extensions (CSE) standards of Mobile Industry Processor Interface (MIPI) Alliance without distinguishing a type and a structure of the packet to generate an application packet, and a communication unit configured to transmit the application packet to a communication partner apparatus.

## Description

### TECHNICAL FIELD

The present disclosure relates to a communication apparatus and a communication system.

### BACKGROUND ART

A technique for performing high-speed serial communication via a transmission cable connected between a plurality of apparatuses has been proposed (Patent Document 1). This type of high-speed serial communication is used in various fields and is used for communication between in-vehicle equipment, for example.

Currently, a camera interface CSI-2 (camera serial interface-2) standardized by Mobile Industry Processor Interface (MIPI) Alliance is a de facto standard and widely used in mobile equipment such as smartphones. In addition, the CSI-2 standards are used not only in mobile equipment but also in interfaces of camera systems to be mounted on vehicles that attract attention in an advanced driving assistant system (ADAS), an automated driving technology, and the like, and its application field is expanding more and more.

### CITATION LIST

### PATENT DOCUMENT

Patent Document 1: JP 2011-239011 A

### SUMMARY OF THE INVENTION

### PROBLEMS TO BE SOLVED BY THE INVENTION

With development of the automated driving technology and electronic technology, there is an increasing need for high-speed communication between in-vehicle equipment. Automotive SerDes Alliance (ASA) assumes that high-speed serial communication is performed between two apparatuses connected to a cable using a time division duplexing (TDD) communication scheme.

In the ASA spec ver 1.1, there is no application format (application stream encapsulation protocol: ASEP) for transmitting data conforming to the CSI-2 standards of the MIPI Alliance, but there are various demands for handling data conforming to the CSI-2 standards. Thus, there can be a possibility that a mechanism for transmitting data conforming to the CSI-2 standards may be standardized by the ASA. In the CSI-2 standards, a plurality of types of packets having a plurality of structures is defined, and it is desirable to efficiently transmit a plurality of different types of packets having different structures at high speed.

The present disclosure therefore provides a communication apparatus and a communication system capable of efficiently transmitting a plurality of different types of packets having different structures conforming to the CSI-2 standards of the MIPI at high speed.

### SOLUTIONS TO PROBLEMS

According to an embodiment of the present disclosure, there is provided a communication apparatus including:
a packet generation unit configured to encapsulate a packet conforming to camera serial interface 2 (CSI-2) standards defined by camera service extensions (CSE) standards of Mobile Industry Processor Interface (MIPI) Alliance without distinguishing a type and a structure of the packet to generate an application packet; and
a communication unit configured to transmit the application packet to a communication partner apparatus.

The application packet may have the same transmission format regardless of the type and the structure of the packet conforming to the CSI-2 standards.

The type of the packet may include a legacy CSI-2 packet in which the CSE is not performed, a service extensions packet (SEP), and a frame-based service extension data (FSED).

The structure of the packet may include information indicating that the packet is not divided and information indicating a head, a middle, or an end of a divided packet.

The application packet may include a header, a payload, and a cyclic redundancy check (CRC) parity bit.

The header may include a first indicator indicating start of the packet.

The header may include a second indicator indicating that the type of the packet is any of a legacy CSI-2 packet in which the CSE is not performed, an SEP, or an FSED.

The application packet may include information indicating a C-PHY or a D-PHY defined in the CSI-2 standards, and
the header may include a third indicator indicating the C-PHY, the D-PHY, or other physical layer standards.

The header may include a fourth indicator indicating whether the structure of the packet is a structure in which the packet conforming to the CSI-2 standards is not divided or indicating a head, a middle, or an end of a divided packet obtained by dividing the divided packet.

The header may include a fifth indicator indicating a size of the application packet.

The header may include a sixth indicator indicating a timestamp indicating time at which the application packet is generated.

The header may include a seventh indicator indicating a CRC parity bit for verifying information regarding the header.

The payload may include a short packet not including a payload body or a long packet including the payload body.

The payload may include the short packet or the long packet for a legacy CSI-2 packet, the short packet or the long packet for an SEP, or the short packet or the long packet for an FSED.

The CRC parity bit may be a parity bit for verifying the payload.

The number of bytes that can be transmitted in one application packet may be equal to or less than 4096 bytes including the CRC parity bit.

The CSI-2 packet exceeding 4092 bytes may be transmitted after being divided into two or more application packets each including equal to or less than 4092 bytes.

According to an embodiment of the present disclosure, there is provided a communication apparatus including:
a communication unit configured to receive, from a communication partner apparatus, an application packet generated by encapsulating a packet conforming to camera serial interface 2 (CSI-2) standards defined by camera service extensions (CSE) standards of Mobile Industry Processor Interface (MIPI) Alliance without distinguishing a type and a structure of the packet; and
a packet decomposition unit configured to extract the packet conforming to the CSI-2 standards from the application packet.

According to an embodiment of the present disclosure, there is provided a communication system including:
a first communication apparatus; and
a second communication apparatus configured to alternately transmit and receive information to and from the first communication apparatus within a period allocated by a time division duplex (TDD) communication scheme,
the first communication apparatus including
a packet generation unit configured to encapsulate a packet conforming to camera serial interface 2 (CSI-2) standards defined by camera service extensions (CSE) standards of Mobile Industry Processor Interface (MIPI) Alliance without distinguishing a type and a structure of the packet to generate an application packet, and
a first communication unit configured to transmit the application packet to a communication partner apparatus,
the second communication apparatus including
a second communication unit configured to receive the application packet from the first communication unit, and
a packet decomposition unit configured to extract the packet conforming to the CSI-2 standards from the application packet.

### BRIEF DESCRIPTION OF DRAWINGS

Fig. 1 is a block diagram illustrating a schematic configuration of a communication system according to an embodiment of the present disclosure.
Fig. 2 is a block diagram illustrating an example in which a video signal output from an image sensor chip is transmitted over a long distance via a SerDes bridge chip 12.
Fig. 3 is a functional block diagram of an in-vehicle SerDes bridge device conforming to ASA standards.
Fig. 4 is a block diagram illustrating an internal configuration of the image sensor chip capable of selecting a SEP or an FSED in CSE standards.
Fig. 5 is a view indicating an image transmission format of a CSI-2 packet.
Fig. 6 is a view indicating an example in which image information regarding two screens is transmitted using a VC in a PH of the CSI-2 packet.
Fig. 7 is a diagram indicating schematic procedure of transmitting the CSI-2 packet by ASA ASEP.
Fig. 8 is a functional block diagram of an ASA bridge chip in a case where arbitrary application data is transmitted.
Fig. 9 is a view indicating a structure of a packet to be transmitted in each functional block in the ASA bridge chip in Fig. 9.
Fig. 10 is a view indicating information included in an application packet.
Fig. 11 is a view indicating a division example of the application packet.
Fig. 12 is a view indicating a packet structure in a case where short packets are continuously transmitted.
Fig. 13 is a view indicating a structure of the application packet to be transmitted by a communication apparatus according to an embodiment of the present disclosure.
Fig. 14A is a functional block diagram of an image sensor and an ASA SerDes chip that convert the CSI-2 packet into a C/D-PHY signal and transmit a video signal.
Fig. 14B is a functional block diagram of the ASA SerDes chip that transmits the video signal without converting the CSI-2 packet into the C/D-PHY signal.
Fig. 15A is a view indicating a structure of a CSI-2 ASEP packet including a legacy CSI-2 long packet.
Fig. 15B is a view indicating a structure of the CSI-2 ASEP packet including a legacy CSI-2 Short packet.
Fig. 15C is a view indicating a structure of the CSI-2 ASEP packet including an SEP CSI-2 long packet.
Fig. 15D is a view indicating a structure of the CSI-2 ASEP packet including an SEP CSI-2 short packet.
Fig. 15E is a view indicating a structure of the CSI-2 ASEP packet including an FSED CSI-2 long packet.
Fig. 15F is a view indicating a structure of the CSI-2 ASEP packet including an FSED CSI-2 short packet.
Fig. 16A is a view indicating a structure of the CSI-2 ASEP packet including the legacy CSI-2 packet and having a packet size equal to or less than 4092 bytes.
Fig. 16B is a view indicating a structure of the CSI-2 ASEP packet including the legacy CSI-2 packet and having a packet size equal to or less than 8184 bytes.
Fig. 16C is a view indicating a structure of the CSI-2 ASEP packet including the legacy CSI-2 packet and having a packet size equal to or less than 12276 bytes.
Fig. 17A is a view indicating a structure of the application packet including only one CSI-2 ASEP.
Fig. 17B is a view indicating a structure of the application packet including two CSI-2 ASEPs.
Fig. 17C is a view indicating a structure of the application packet including only one CSI-2 ASEP after division.
Fig. 17D is a view indicating a structure of the application packet including two CSI-2 ASEPs after division.
Fig. 18A is a view indicating an example of a structure of the CSI-2 ASEP packet including the legacy CSI-2 packet.
Fig. 18B is a view indicating an example of a structure of the CSI-2 ASEP packet including an SEP CSI-2 packet.
Fig. 18C is a view indicating an example of a structure of the CSI-2 ASEP packet including an FSED CSI-2 packet.
Fig. 19A is a view indicating an example in which the CSI-2 packet is 4000 bytes.
Fig. 19B is a view indicating an example in which the CSI-2 packet is 8100 bytes.
Fig. 20 is a view indicating a modification of the CSI-2 ASEP header illustrated in Fig. 14.
Fig. 21 is a view indicating a structure of the CSI-2 ASEP including the CSI-2 packet of 9000 bytes.

### MODE FOR CARRYING OUT THE INVENTION

Hereinafter, an embodiment of a communication apparatus and a communication system will be described with reference to the drawings. Although main components of the communication apparatus and the communication system will be mainly described below, the communication apparatus and the communication system may have components and functions that are not illustrated or described. The following description is not intended to exclude components and functions that are not illustrated or described.

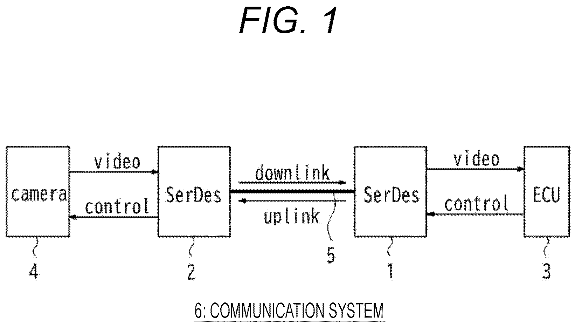

Fig. 1 is a block diagram illustrating a schematic configuration of a communication system according to an embodiment of the present disclosure. A communication system 6 according to the embodiment includes a SerDes 1 and a SerDes 2 that perform high-speed serial transmission. The SerDes 1 and the SerDes 2 perform high-speed serial communication using, for example, a time division duplexing (TDD) communication scheme. In the present specification, one of the SerDes 1 and the SerDes 2 may be referred to as a first communication apparatus or a communication apparatus, and the other may be referred to as a second communication apparatus or a communication partner apparatus. For example, the first communication apparatus includes: a packet generation unit configured to encapsulate a packet conforming to camera serial interface 2 (CSI-2) standards defined by camera service extensions (CSE) standards of MIPI Alliance without distinguishing a type and a structure of the packet to generate an application packet; and a first communication unit configured to transmit the application packet to a communication partner apparatus. The second communication apparatus includes a second communication unit configured to receive the application packet from the first communication unit, and a packet decomposition unit configured to extract the packet conforming to the CSI-2 standards from the application packet.

For example, an electronic control unit (ECU) 3 is connected to the SerDes 1, and for example, a camera 4 is connected to SerDes 2. The camera 4 includes, for example, an image sensor, and transmits image data (hereinafter, may be referred to as a video signal) captured by the image sensor to SerDes 2. The SerDes 2 generates a downlink packet obtained by encapsulating the video signal and transmits the downlink packet to the SerDes 1 through a cable 5. The SerDes 1 extracts the video signal included in the received downlink packet and transmits the video signal to the ECU 3. The ECU 3 transmits a control signal for the camera 4 to the SerDes 1. The SerDes 1 generates an uplink packet obtained by encapsulating the received control signal and transmits the uplink packet to the SerDes 2 through the cable 5. The SerDes 2 extracts a control signal included in the received uplink packet and transmits the control signal to the camera 4. The camera 4 generates a video signal on the basis of the control signal.

The ASA adopts asymmetric bidirectional transmission in which downlink for transmitting high-speed large-capacity data such as the video signal illustrated in Fig. 1 and uplink for transmitting low-speed small-capacity data such as the control signal are time-division multiplexed (TDD). In the ASA, it is assumed that a downlink transmission period is longer than an uplink transmission period, and a transmission capacity of a downlink packet is much larger than a transmission capacity of an uplink packet.

While an in-vehicle camera data transmission system usually requires a transmission distance of several meters to several tens of meters, with C-PHY or D-PHY (hereinafter, D/C-PHY) standardized by the MIPI, it is difficult to perform long-distance transmission exceeding several meters. Thus, transmission is generally performed via a SerDes bridge chip that can perform long-distance transmission. An FPD-LINK or GVIF is used in such applications.

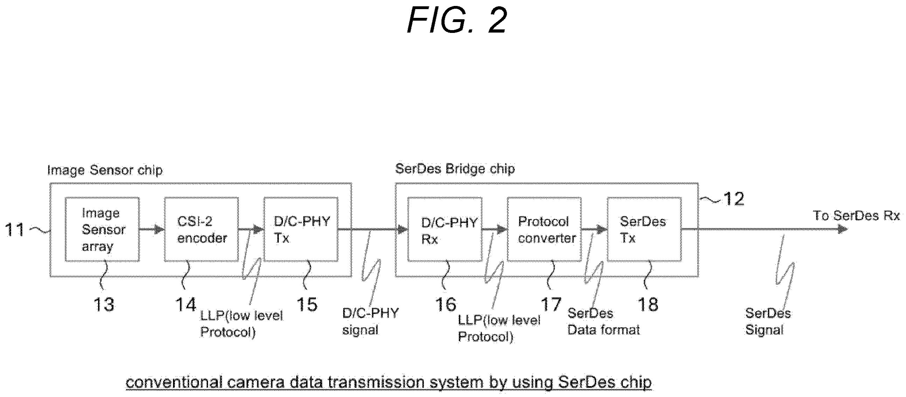

Fig. 2 is a block diagram illustrating an example in which a video signal output from an image sensor chip 11 is transmitted over a long distance via a SerDes bridge chip 12. The image sensor chip 11 in Fig. 2 corresponds to the camera 4 in Fig. 1, and the SerDes bridge chip 12 corresponds to the SerDes 2 in Fig. 1.

The image sensor chip 11 includes an image sensor array 13, a CSI-2 encoder 14, and a D-PHY or C-PHY transmission unit (hereinafter, D/C-PHY Tx) 15. The image sensor array 13 outputs a video signal. The CSI-2 encoder 14 converts the video signal into a packet conforming to the CSI-2 standards (hereinafter, referred to as a CSI-2 packet) and transmits the packet using a low-level protocol (LLP). The D/C-PHY Tx 15 generates a D/C-PHY signal standardized by the MIPI including the video signal and transmits the D/C-PHY signal to the SerDes bridge chip 12.

The SerDes bridge chip 12 includes a D-PHY or C-PHY reception unit (hereinafter, D/C-PHY Rx) 16, a protocol converter 17, and a SerDes transmission unit (hereinafter, SerDes Tx) 18. The D/C-PHY Rx 16 receives and transmits the D/C-PHY signal to the protocol converter 17 using a low-level protocol (LLP). The protocol converter 17 transmits the received video signal to the SerDes Tx 18 in the SerDes data format. The SerDes Tx 18 transmits the SerDes signal including the video signal to, for example, a SerDes Rx (not illustrated) in the SerDes 1 of Fig. 1.

The D/C-PHY Rx 16 in the SerDes bridge chip 12 illustrated in Fig. 2 receives the D/C-PHY signal transmitted from the image sensor chip 11, and extracts the CSI-2 packet. The protocol converter 17 converts the received CSI-2 packet into a signal in the SerDes data format that can be transmitted by the SerDes bridge chip 12. The SerDes Tx 18 transmits the signal converted in the SerDes data format in accordance with serial transmission specifications adopted by the SerDes bridge chip 12 itself. Such processing enables long-distance transmission of the CSI-2 packet.

On the other hand, the FPD-LINK and GVIF are based on individual specifications or standards and are not disclosed to the public. Thus, a vendor that can develop and supply the SerDes device is limited. In view of such a situation, open SerDes standardization activities for in-vehicle use have been conducted. For example, A-PHY and Automotive SerDes Alliance (ASA) standardized by the MIPI alliance are examples of such activities.

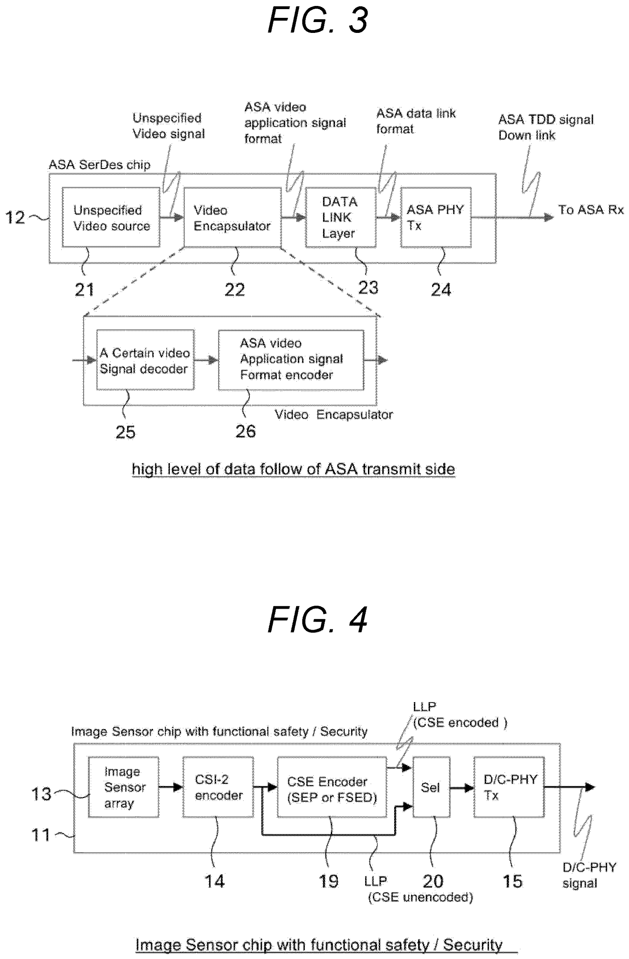

Fig. 3 is a functional block diagram of an in-vehicle SerDes bridge device (hereinafter, may be referred to as ASA SerDes chip or ASA bridge chip) 12 conforming to the ASA standards. The ASA SerDes chip 12 in Fig. 3 has an arbitrary video source (unspecified video source) 21, a video encapsulator 22, a data link layer 23, and an ASA PHY Tx 24. The video encapsulator 22 includes an arbitrary video signal decoder 25 and an ASA video application signal format encoder 26.

The ASA SerDes chip 12 in Fig. 3 is basically constituted in a similar manner to the SerDes bridge chip 12 in Fig. 2. In order to provide versatility as standards, the video encapsulator 22 in Fig. 3 does not define types of the video source 21 and the video signal to be transmitted, but defines only a transmission signal format (ASA video application signal format) after an arbitrary video signal that has been input is appropriately converted.

However, in the processing to be performed by the ASA SerDes chip 12 in Fig. 3, in a case of handling only a specific video signal determined in advance as a whole of the system (for example, a video signal conforming to the CSI-2 standards), processing of converting the format into the transmission signal format (ASA video application signal format) standardized by the ASA standards after decoding by the video signal decoder 25 in the video encapsulator 22 becomes redundant (first problem).

In recent years, the video signal is used in various applications, and thus, a security function for protecting the video signal from a third party and functional safety for ensuring that the video signal is correctly transmitted are required. The MIPI Alliance develops the camera service extensions (CSE) standards in order to add these functions to the CSI-2 packet conforming to the CSI-2 standards.

The CSE standards prepare two transmission schemes called service extensions packet (SEP) and frame-based service extension data (FSED) depending on a difference between a range guaranteed by security extension data to be added to the CSI-2 packet and a place where the security extension data is to be added. Which transmission scheme is used is determined by specifications, an application, a system, and the like, of a device that supports the transmission scheme.

Fig. 4 is a block diagram illustrating an internal configuration of the image sensor chip 11 capable of selecting the SEP or the FSED in the CSE standards. The image sensor chip 11 in Fig. 4 includes a CSE encoder 19 and a selector (Sel) 20 in addition to the image sensor array 13, the CSI-2 encoder 14, and the D/C-PHY Tx 15. The CSE encoder 19 performs SEP processing or FSED processing on the CSI-2 packet output from the CSI-2 encoder 14 to generate the SEP or the FSED.

The selector 20 outputs a legacy CSI-2 packet in which CSE processing is not performed, a CSI-2 packet in which SEP processing has been performed (SEP CSI-2 packet), or a CSI-2 packet in which FSED processing has been performed (FSED CSI-2 packet).

As described above, in order to transmit the CSI-2 packet in the ASA SerDes chip 12, there is a second problem that three types of CSI-2 packets, that is, the legacy CSI-2 packet, the SEP CSI-2 packet and the FSED CSI-2 packet, need to be transmitted.

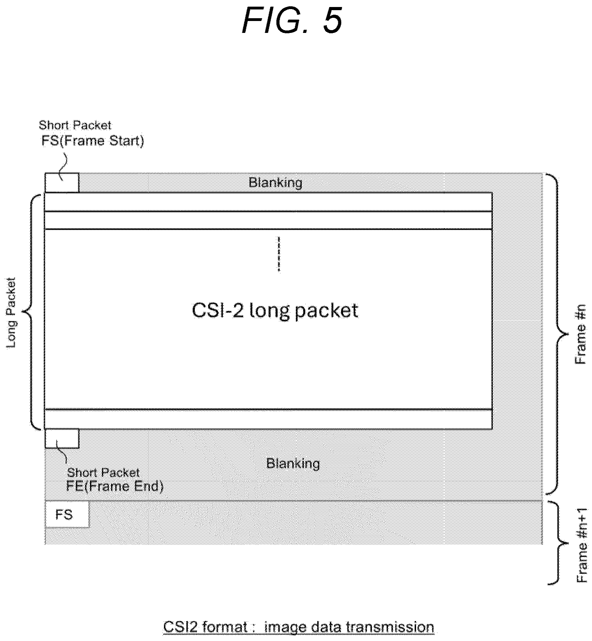

Fig. 5 is a view indicating a structure of the CSI-2 packet and an image transmission format. The CSI-2 packet includes a long packet and a short packet. Fig. 5 is a view indicating an image transmission format of the CSI-2 packet.

As indicated in Fig. 5, a short packet having only an FS is transmitted at the head of one frame, and a short packet having only an FE is transmitted at the end of one frame. The long packet is transmitted between the FS and the FE.

In the CSI-2 standards, a packet length up to 65536 bytes can be transmitted.

In the CSI-2 standards, an LLP for the D-PHY and an LLP for the C-PHY are partially different in format. Thus, in a case where the CSI-2 packet is transmitted without changing its transmission format, it is necessary to distinguish whether the packet is for the D-PHY or for the C-PHY (third problem).

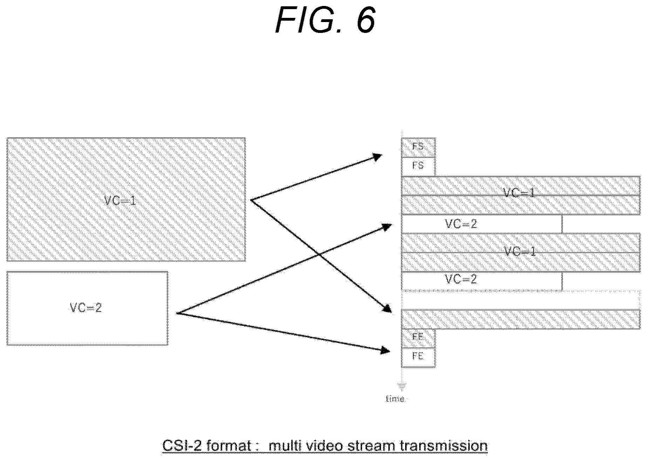

Fig. 6 is a view indicating an example in which image information regarding two screens is transmitted using a virtual channel (VC) function of the CSI-2 packet. In the CSI-2, a plurality of pieces of image information having different image sizes and frame rates can be mixed and transmitted. It is therefore possible to transmit short packets at different timings for each image and transmit long packets having different lengths.

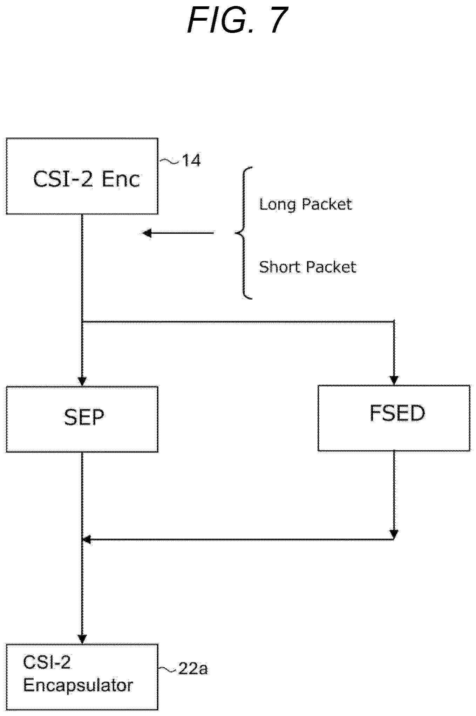

Fig. 7 is a diagram indicating schematic procedure of transmitting the CSI-2 packet in ASA ASEP. As indicated in Fig. 7, the CSI-2 encoder 14 converts the video signal into a long packet and a short packet conforming to the CSI-2 standards. If the CSI-2 packet is the SEP CSI-2 packet, the CSI-2 packet is converted into a long packet and a short packet in a format in accordance with the SEP CSI-2 packet. If the CSI-2 packet is the FSED CSI-2 packet, the CSI-2 packet is converted into a long packet and a short packet in a format in accordance with the FSED CSI-2 packet.

The converted packet is converted into a signal of a protocol adaptation layer (PAL) conforming to the ASA standards, and then converted into a signal of the A-PHY conforming to the ASA standards.

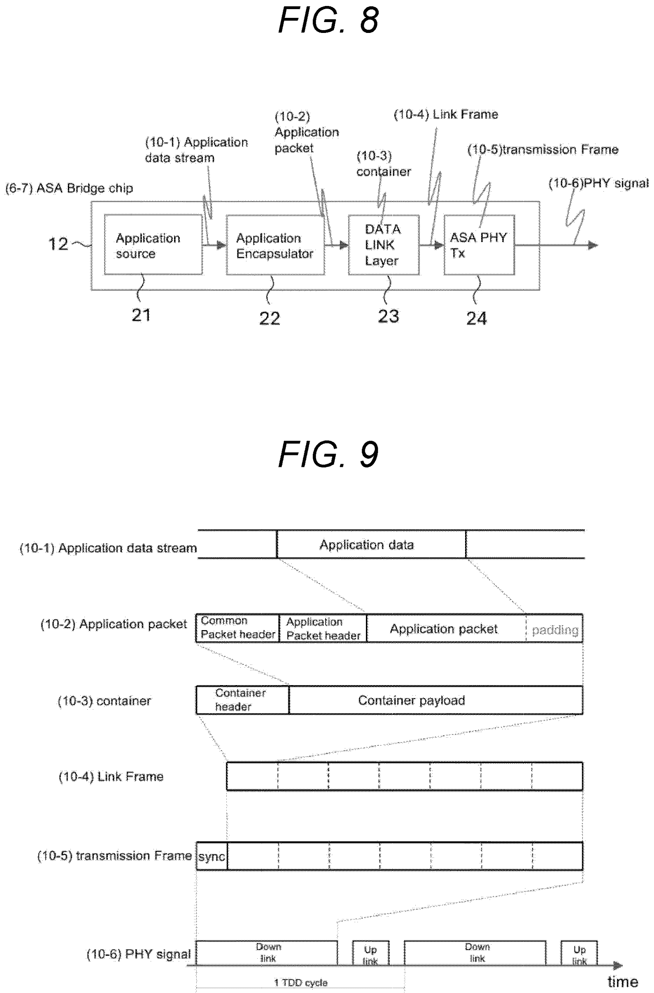

While Fig. 3 illustrates a functional block diagram of the ASA bridge chip 12 in a case where an arbitrary video signal is transmitted, Fig. 8 is a functional block diagram of the ASA bridge chip 12 in a case where arbitrary application data is transmitted. As illustrated in Fig. 8, the ASA bridge chip 12 includes an application source 21, an application encapsulator 22, a data link layer 23, and an ASA PHY Tx 24. The type of an application data stream generated by the application source 21 is not limited.

Fig. 9 is a view indicating a structure of a packet to be transmitted in each functional block in the ASA bridge chip 12 in Fig. 8.

The application source 21 outputs an application data stream (10-1). The application data stream (10-1) is packetized into an application packet (10-2) by the application encapsulator 22 standardized by the ASA standards.

The application packet (10-2) includes a packet header for transmitting packet information, an application packet for transmitting an application signal, and a cyclic redundancy check (CRC) parity bit for detecting an error occurring in the application packet (10-2) during transmission.

The application packet (10-2) is stored in a container payload having an upper packet structure called a container (10-3) in the data link layer 23 and transmitted. The container (10-3) includes a container header for controlling a container structure and the container payload described above.

The data link layer 23 collects a plurality of containers and generates a link frame (10-4) according to a transmission occupancy time width of time division duplex (TDD) adopted by the ASA standards. A synchronization signal (sync) is added to the head of the link frame (10-4) to constitute a transmission frame (10-5).

The ASA PHY Tx 24 converts the transmission frame (10-5) into a PHY signal (10-6) and transmits the PHY signal to the corresponding channel.

As described above, the ASA standards adopt the TDD transmission scheme, and thus, a size of the container payload of the container (10-3) to be transmitted in one TDD cycle is standardized by the ASA standards, and the size varies depending on conditions such as whether or not encryption is performed, but is about 630 bytes.

However, there are various types of applications, and a size of data to be transmitted also depends on the types, and thus, is not standardized. Thus, in the ASA standards, a container control structure for transmitting application data having a size larger than the size of the container payload is standardized.

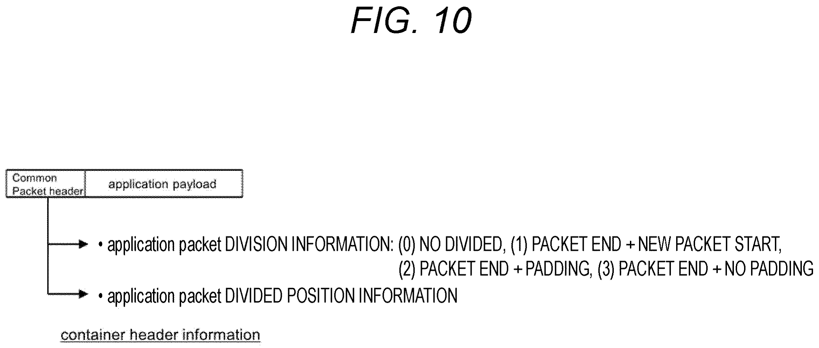

Fig. 10 is a view indicating information included in the application packet. The application packet has a common packet header and an application payload. The common packet header includes information indicating which of four types of divided states the application packet stored in the application payload is: (0) not divided; (1) the application packet ends and a new application packet starts; (2) the application packet ends, then 0 padding is performed, and the container ends; and (3) the application packet ends just at the end of the container payload.

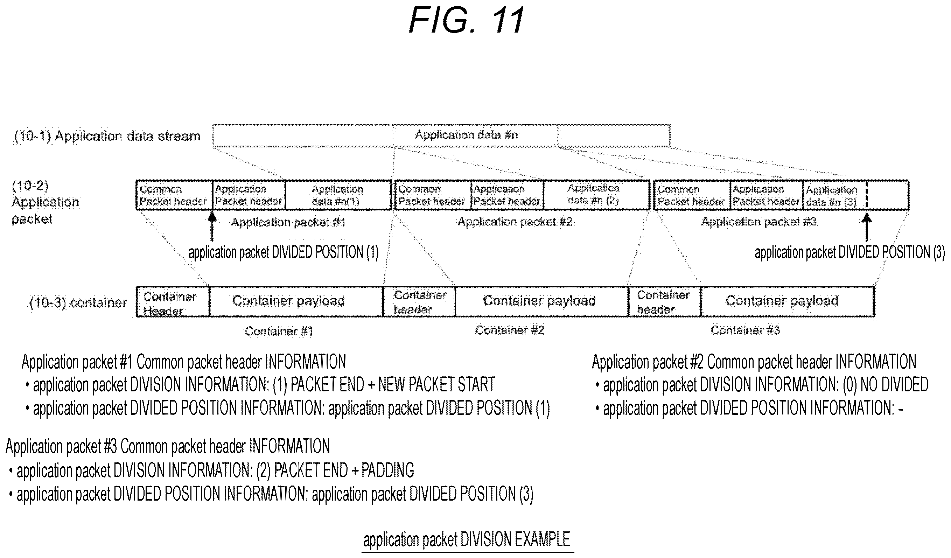

Fig. 11 is a view indicating a division example of the application packet. Fig. 11 indicates an example in which the application packet (10-2) includes an application packet #1 included in application data #n-1 in the application data stream (10-1), an application packet #2 included in application data #n, and an application packet #3 included in application data #n+1.

The common packet header of the application packet #1 includes (1) packet end + new packet start information as application packet division information and includes an application packet divided position (1) as application packet divided position information.

The common packet header of the application packet #2 includes (0) no divided as the application packet division information and does not include the application packet divided position information.

The common packet header of the application packet #3 includes (2) information indicating packet end + padding as the application packet division information and includes an application packet divided position (3) as the application packet divided position information.

As indicated in the container (10-3) in Fig. 11, the data link layer 23 stores the application packets #1 to #3 in the containers #1 to #3.

If the divided state is defined by the common packet header as indicated in Fig. 10, there is an advantage that division control of the application packet can be easily performed, but only one application packet having the application header can be transmitted to one container. This causes a fourth problem that transmission efficiency deteriorates because in a case where the CSI-2 packet (short packet or long packet) as indicated in Fig. 6 is packed as application packets conforming to different ASA standards and stored in containers, even a short packet of about 10 bytes uses a container of about 630 bytes and consumes 600 bytes or more as padding bytes, or the like.

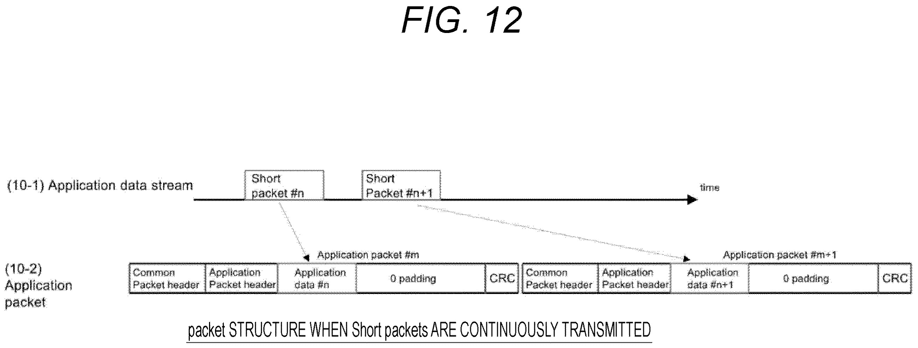

Fig. 12 is a view indicating a packet structure in a case where short packets are continuously transmitted. As indicated in Fig. 12, although the short packet does not have a payload, each short packet is transmitted in one application packet, and thus transmission efficiency deteriorates.

As described above, the long packet length of the CSI-2 packet for transmitting the image information is a maximum of 65536 bytes. In a case of packing such a long packet in the application packet conforming to the ASA standards, error detection capability of the CRC to be used in the ASA standards is guaranteed up to 4096 bytes, and thus, in a case where the long packet length is longer than 4092 bytes, it is necessary to divide the long packet into packets having a length equal to or less than the length and store the divided packets in respective application packets, so that a function of dividing and transmitting the CSI-2 packet needs to be provided in the application packet (fifth problem).

Further, as indicated in Fig. 6, in the CSI-2 packet format, a plurality of pieces of image information can be simultaneously transmitted using VC. However, it is important to add information for synchronizing the plurality of pieces of image information on a reception side, and it is necessary to provide means for the addition (sixth problem).

The present disclosure can provide an application packet structure capable of solving the above-described first to sixth problems while maintaining a container structure defined by the current standards and a function thereof when the CSI-2 packet is transmitted on an in-vehicle SerDes bridge device conforming to the ASA standards.

A communication apparatus according to an embodiment of the present disclosure includes a functional block diagram similar to that of the ASA bridge chip (SerDes bridge chip) 12 in Fig. 8. The application encapsulator in the ASA bridge chip 12 according to the present embodiment functions as a packet generation unit that encapsulates a packet conforming to the CSI-2 standards defined by the CSE standards of the MIPI Alliance without distinguishing a type and a structure of the packet to generate an application packet. The data link layer 23 and the ASA PHY Tx 24 in the ASA bridge chip 12 function as a communication unit that transmits the above-described application packet to the SerDes 2 which is a communication partner apparatus.

The application packets have the same transmission format regardless of the type and the structure of the packet conforming to the CSI-2 standards.

The type of the packet includes a legacy CSI-2 packet in which CSE is not performed, an SEP, and an FSED. The structure of the packet includes information indicating that the packet is not divided and information indicating a head, a middle, or an end of the divided packet.

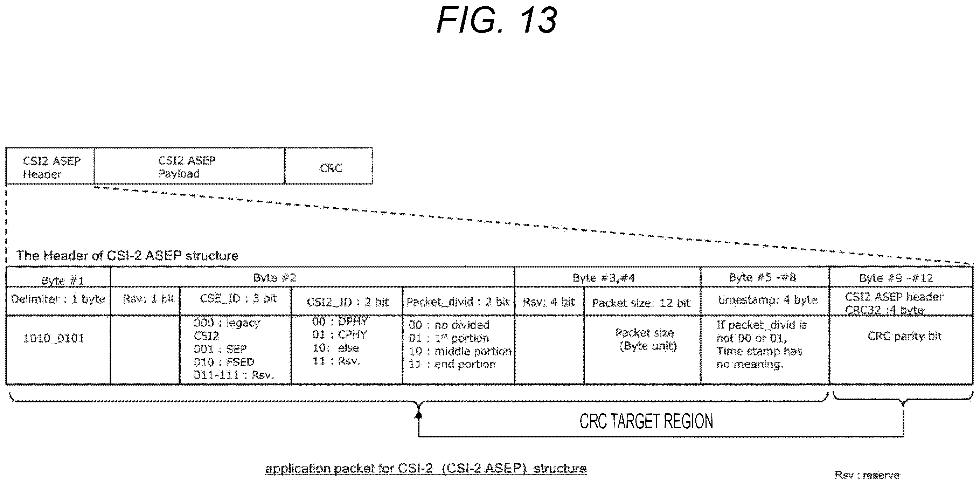

Fig. 13 is a view indicating a structure of the application packet (hereinafter, may be referred to as a CSI-2 ASEP packet) to be transmitted by the communication apparatus according to an embodiment of the present disclosure. The CSI-2 ASEP packet includes a CSI-2 ASEP header, a CSI-2 ASEP payload, and a CRC. The application packet in Fig. 13 is output from the application encapsulator in Fig. 8.

A byte #1 (first indicator) of the CSI-2 ASEP header is a 1-byte length delimiter. The delimiter is a specific value that is located at the head of the CSI-2 ASEP header and indicates start of the CSI-2 ASEP packet. In the ASA standards, it is specified that an unused area in which a container does not transmit an application packet is padded with 0 data. Thus, by arranging a delimiter starting with data other than 0 at the head of the CSI-2 ASEP header, a start position of the CSI-2 ASEP can be specified.

A byte #2 of the CSI-2 ASEP header includes a reserve having a 1-bit length, a CSE_ID (second indicator) having a 3-bit length, a CSI2_ID (third indicator) having a 2-bit length, and a Packet_divid (fourth indicator) having a 2-bit length. The CSE_ID of 000 indicates a legacy CSI2 not to be subjected to CSE processing, the CSE_ID of 001 indicates an SEP, the CSE_ID of 010 indicates an FSED, and the CSE_ID of 011-111 indicates a reserve. The CSI2_ID of 00 indicates a D-PHY, the CSI2_ID of 01 indicates a C-PHY, the CSI2_ID of 10 indicates others, and the CSI2_ID of 11 indicates a reserve. The Packet_divid of 00 indicates no divided, the Packet _divid of 01 indicates the head of the divided packet, the Packet _divid of 10 indicates the middle of the divided packet, and the Packet _divid of 11 indicates the end of the divided packet.

Bytes #3 and #4 of the CSI-2 ASEP header have a reserve having a 4-bit length, and a packet size (fifth indicator) having a 12-bit length. The packet size indicates a packet length of the CSI-2 packet.

Bytes #5 to #8 of the CSI-2 ASEP header are timestamps (sixth indicators) having a length of 4 bytes. If packet_divid is not 00 or 01, timestamp has no meaning. The timestamp has a meaning in a case where a short packet, an undivided long packet, or a first part of a divided long packet of the CSI-2 packet to be transmitted by a CSI-2 ASEP payload is transmitted and records a precision time base (PTB) when these CSI-2 packets are input to the CSI-2 ASEP and transmits the PTB to a reception side. This PTB timestamp can be used as synchronization information at the time of reproduction on the reception side. Note that the PTB is defined in the ASA standards and is used for time synchronization between ASA devices.

Bytes #9 to #12 of the CSI-2 ASEP header are a CRC parity bit (seventh indicator) having a 4-byte length. This parity bit is used to detect an error from the 2nd to 8th bytes of the CSI-2 ASEP header.

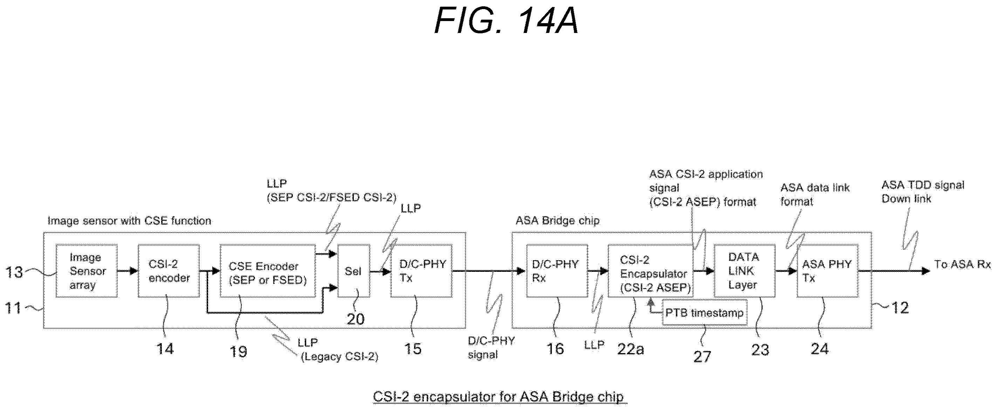

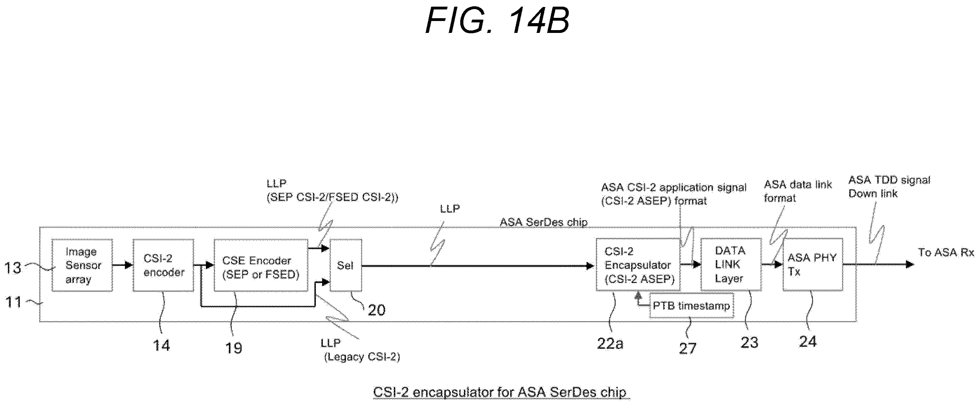

Fig. 14A illustrates a functional block diagram of the image sensor and the ASA SerDes chip 12 that convert the CSI-2 packet into the C/D-PHY signal and transmit the video signal. Fig. 14B is a functional block diagram of the ASA SerDes chip 12 that transmits the video signal without converting the CSI-2 packet into the C/D-PHY signal.

As illustrated in Figs. 14A and 14B, by including the CSI-2 packet (long packet and short packet) output from the CSI-2 encoder 14 in the CSI-2 ASEP packet, any of the legacy CSI-2, the SEP CSI-2, and the FSED CSI-2 can be transmitted.

The CSI-2 ASEP packet stores a packet of the legacy CSI-2, the SEP CSI-2, or the FSED CSI-2 in the CSI-2 ASEP Payload.

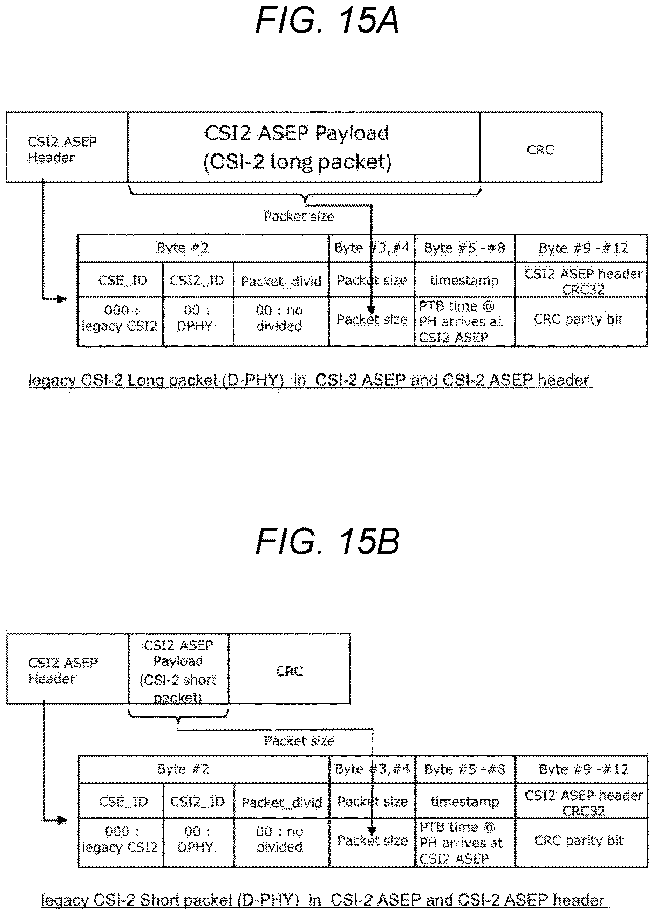

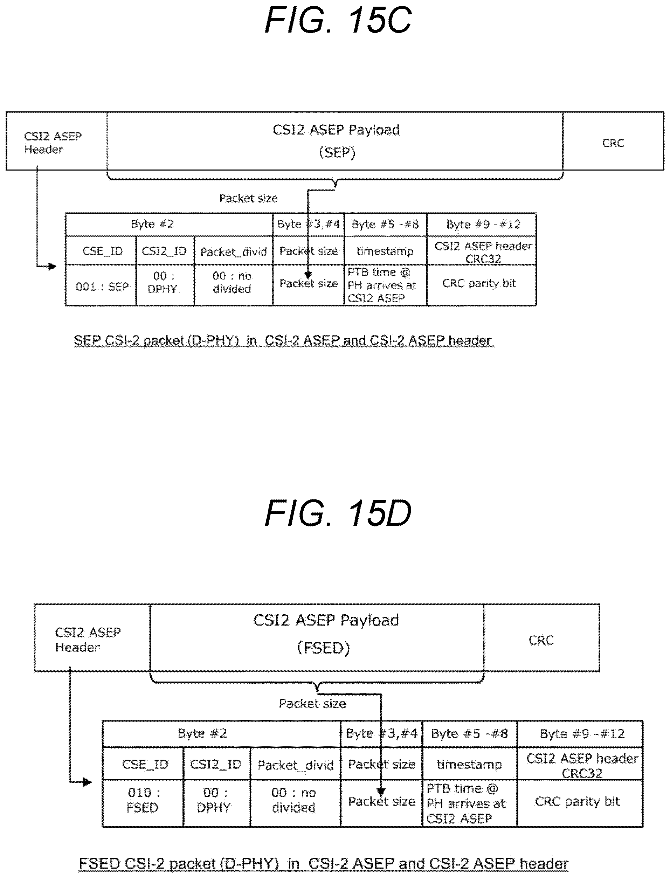

Fig. 15A is a view indicating a structure of the CSI-2 ASEP packet including the legacy CSI-2 long packet, and Fig. 15B is a view indicating a structure of the CSI-2 ASEP packet including the legacy CSI-2 short packet. Fig. 15C is a view indicating a structure of the CSI-2 ASEP packet including the SEP CSI-2 packet, and Fig. 15D is a view indicating a structure of the CSI-2 ASEP packet including the SEP CSI-2 short packet. Fig. 15E is a view indicating a structure of the CSI-2 ASEP packet including the FSED CSI-2 long packet, and Fig. 15F is a view indicating a structure of the CSI-2 ASEP packet including the FSED CSI-2 short packet. Figs. 15A to 15F indicate examples in which the CSI-2 packet is a D-PHY. In a case of the C-PHY, the CSI2_ID becomes 01. The CSI-2 ASEP payload of the SEP CSI-2 packet in Fig. 15C is applicable to both the long packet and the short packet. The CSI-2 ASEP payload of the FSED CSI-2 packet in Fig. 15D is applicable to both the long packet and the short packet.

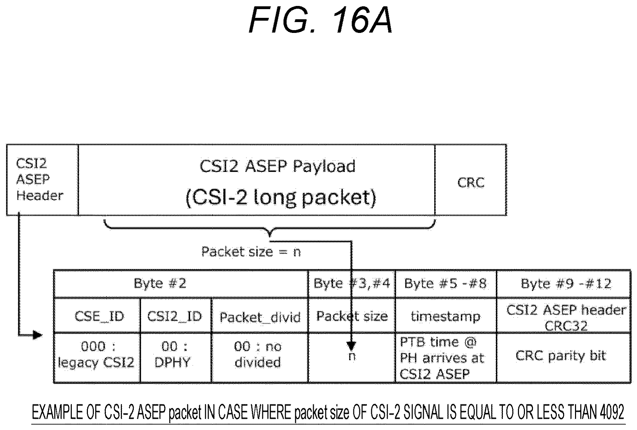

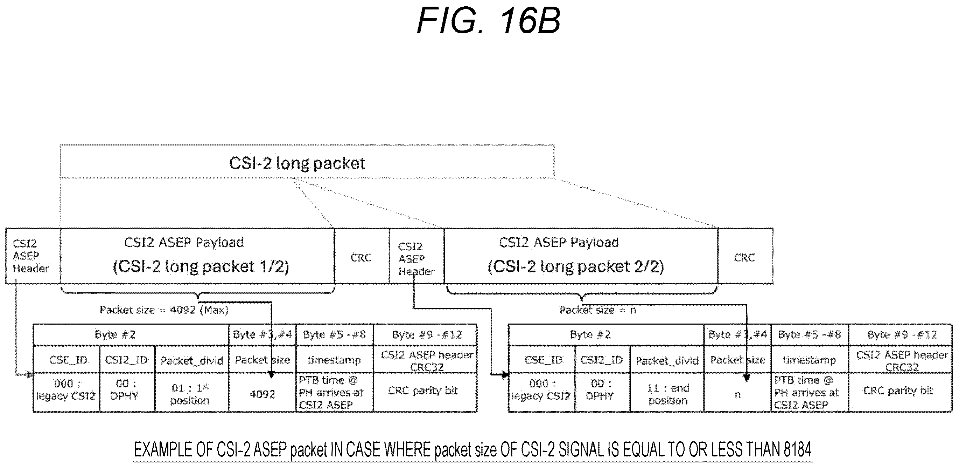

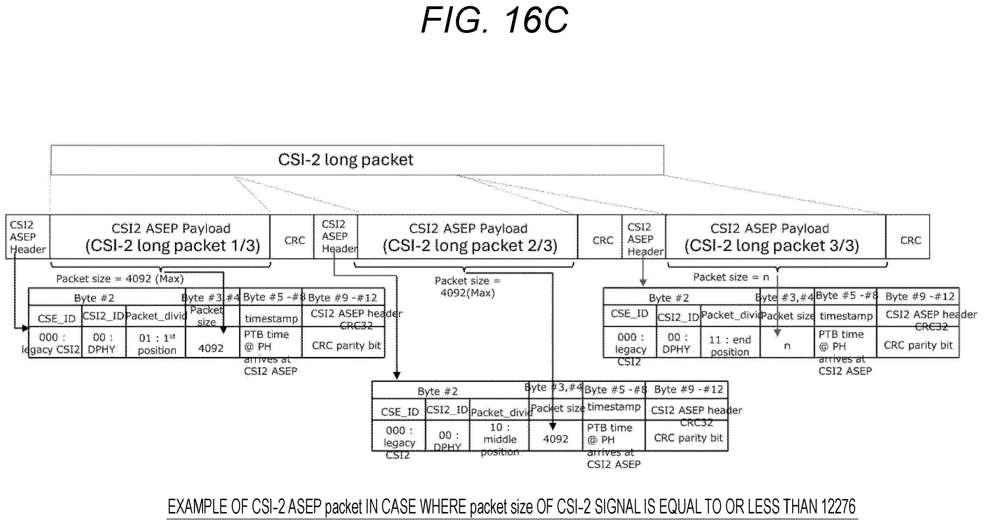

Figs. 16A, 16B, and 16C are views indicating structures of the CSI-2 ASEP packet including the legacy CSI-2 packet and having a packet size equal to or less than 4092 bytes, equal to or less than 8184 bytes, and equal to or less than 12276 bytes, respectively.

The CSI-2 ASEP packet includes a CSI-2 ASEP header, a CSI-2 ASEP payload, and a CRC. The CSI-2 ASEP payload includes the CSI-2 long packet. In a case where the packet size exceeds 4092 bytes, it is necessary to divide the CSI-2 packet and transmit the divided packets as indicated in Figs. 16B and 16C. Specifically, the CSI-2 long packet is divided in units of 4092 bytes and CRC parity bits are added. The reason why the CSI-2 long packet is divided in units of 4092 bytes is that error detection capability of the CRC to be used by the CSI-2 ASEP is equal to or less than 4096 bytes. The CRC parity bit is a parity bit of a maximum of 4092 bytes including the PH and the payload.

In a case where the packet size of the CSI-2 long packet is equal to or less than 4092 bytes, the packet is transmitted while Packet _divid of the header is set as Packet_divid = 00 as indicated in Fig. 16A.

In a case where the packet size of the CSI-2 long packet is equal to or less than 8184 bytes, as indicated in Fig. 16B, the CSI-2 long packet is divided into two, and the Packet _divid of the header of the CSI-2 ASEP that transmits the first divided CSI-2 long packet is set as Packet _divid = 01, and the Packet _divid of the header of the CSI-2 ASEP that transmits the last divided CSI-2 long packet is set as Packet _divid = 11. As a result, the divided position of each divided packet can be specified.

In a case where the packet size of the CSI-2 long packet is equal to or less than 12276 bytes, as indicated in Fig. 16C, the CSI-2 long packet is divided into three, the Packet _divid of the header of the CSI-2 ASEP that transmits the first divided packet is set as Packet _divid = 01, the Packet_divid of the header of the CSI-2 ASEP that transmits the middle divided packet is set as Packet_divid = 10, and the Packet_divid of the header of the CSI-2 ASEP that transmits the last divided packet is set as Packet _divid = 11. Also in a case where the CSI-2 packet is divided into three or more, it is only necessary to use header information similar to that in Fig. 16C.

Further, in a case where the CSI-2 packet (CSI-2 long packet) to be transmitted is the SEP CSI-2 packet or the FSED CSI-2 packet, division processing is similar to the processing described above with only difference in that the CSE_ID is set to 001 in a case of the SEP CSI-2 packet and is set to 010 in a case of the FSED CSI-2 packet. In a case of the C-PHY, it is only necessary to set CSI2_ID to 01. The PTB time when the CSI-2 packet is input to the CSI-2 ASEP is substituted into the timestamp of the header of the CSI-2 ASEP and transmitted.

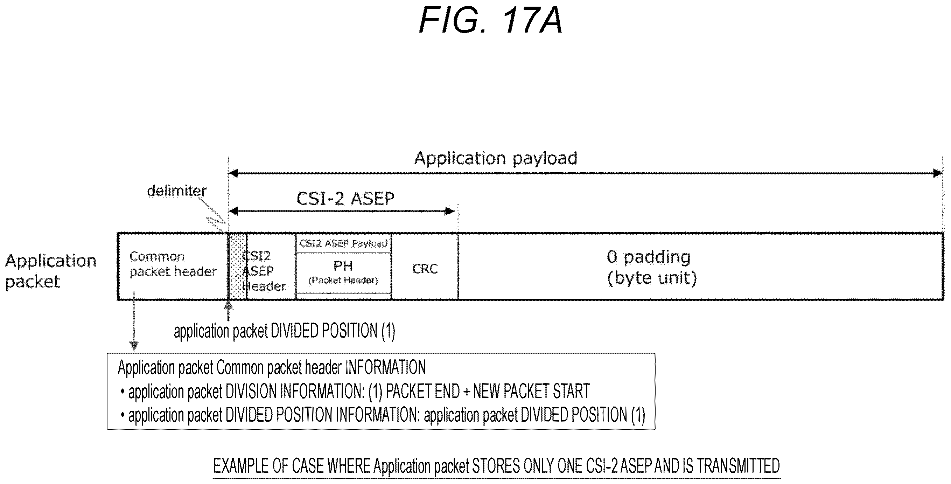

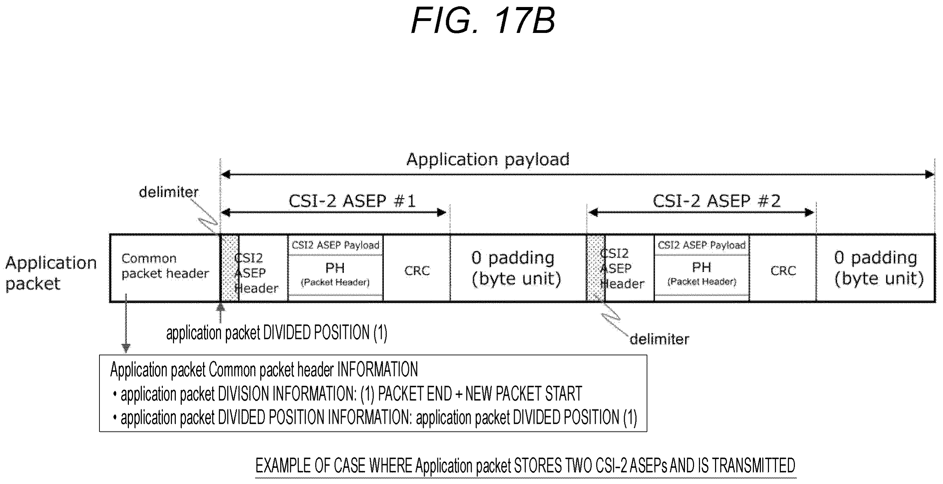

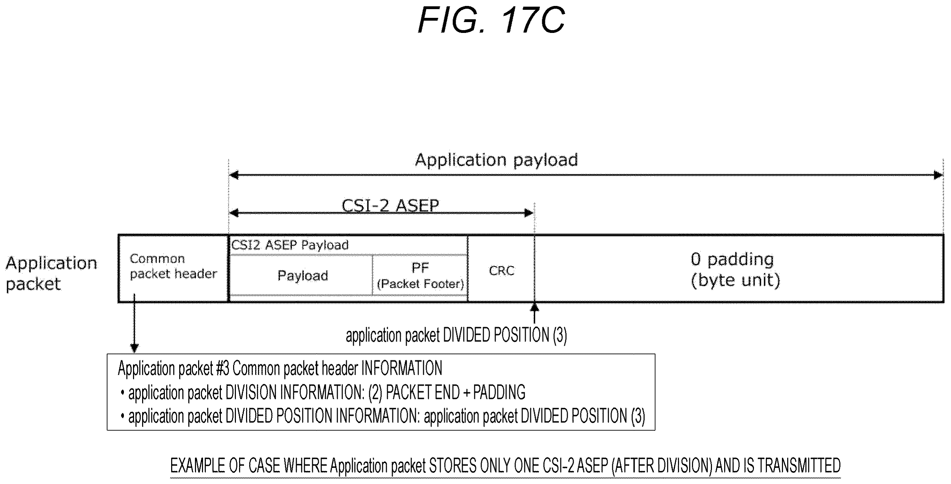

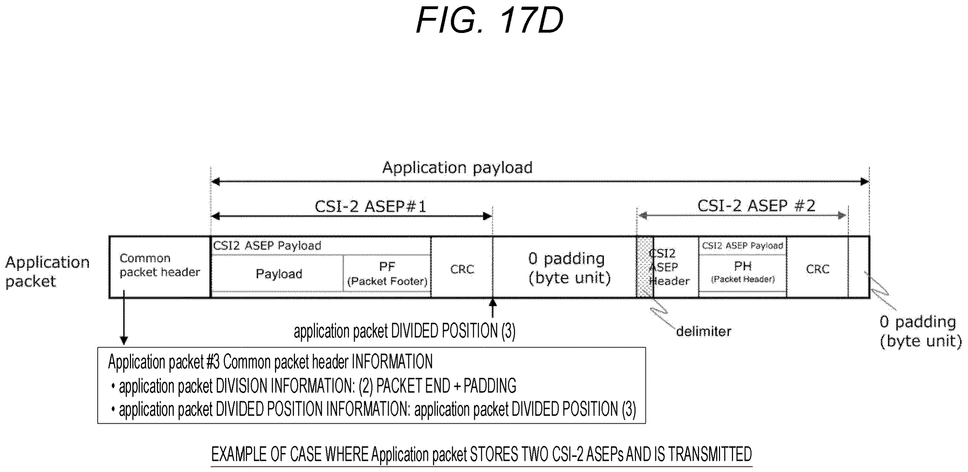

Figs. 17A, 17B, 17C, and 17D are views indicating examples of transmitting one or more CSI-2 ASEPs in one application packet while following the existing ASA standards. Fig. 17A is a view indicating a structure of the application packet including only one CSI-2 ASEP. Fig. 17B is a view indicating a structure of the application packet including two CSI-2 ASEPs.

A common packet header in the application packets in Fig. 17A and Fig. 17B includes application packet division information and application packet divided position information. The application packet division information includes (1) packet end + new packet start information. The application packet divided position information includes an application packet divided position (1).

In Fig. 17A, a free area in the application payload is padded with 0 data. The CSI-2 ASEP in Fig. 17A includes a CSI-2 ASEP header, a CSI-2 ASEP packet, and a CRC parity bit. A delimiter is provided at the head of the CSI-2 ASEP header. The CSI-2 ASEP payload has only the PH.

Fig. 17B indicates an example where CSI-2 ASEP #1 and CSI-2 ASEP #2 are included in the application payload. The areas immediately after the CSI-2 ASEP #1 and immediately after the CSI-2 ASEP #2 are padded with 0 data. Both the CSI-2 ASEP #1 and the CSI-2 ASEP #2 have a CSI-2 ASEP header, a CSI-2 ASEP packet, and a CRC parity bit. A delimiter is provided at the head of the CSI-2 ASEP header. The CSI-2 ASEP payload has only the PH.

The application packet in Fig. 17B indicates an example in which two CSI-2 ASEP packets are stored in the application payload and transmitted in a case where a short packet of the CSI-2 is input to the CSI-2 encapsulator indicated in Fig. 14A or Fig. 14B or in a case where two short packets are continuously input during transmission of 0 padding in Fig. 17A.

In the CSI-2 ASEP (CSI-2 ASEP #2) in the common packet header in the application packet in Fig. 17B, when the head of the CSI-2 ASEP header is a specific value (0xA5) (delimiter), the CSI-2 De-encapsulator on the reception side can determine that a new CSI-2 ASEP is transmitted when finding this value. Similarly, a length of CSI-2 ASEP #2 can be determined by looking at the packet size of the CSI-2 ASEP header.

Fig. 17C is a view indicating a structure of the application packet including only one CSI-2 ASEP packet after division, and Fig. 17D is a view indicating a structure of the application packet including two CSI-2 ASEPs after division. Also in the examples of Figs. 17C and 17D, it can be determined that the second or subsequent CSI-2 ASEP is being transmitted by the delimiter included in the header of the CSI-2 ASEP while the structure of the ASA standards in related art is maintained.

The common packet header in the application packets in Fig. 17C and Fig. 17D includes application packet division information and application packet divided position information. The application packet division information includes (2) information with packet end + padding. The application packet divided position information includes information of an application packet divided position (3).

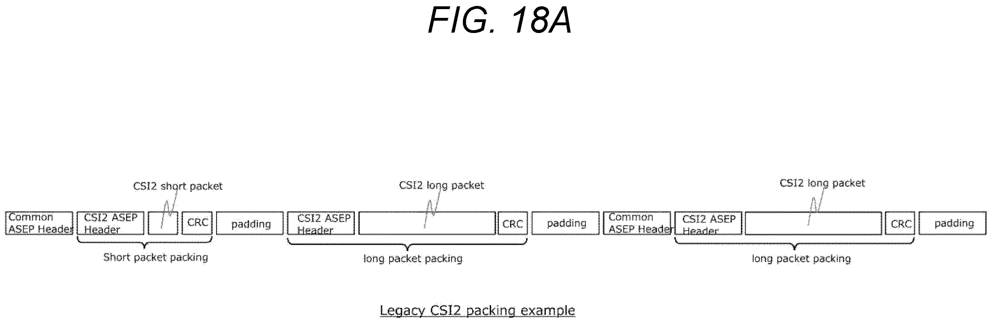

Fig. 18A is a view indicating an example of a structure of the CSI-2 ASEP packet including the legacy CSI-2 packet. Fig. 18A indicates an example in which the CSI-2 ASEP packet includes short packet packing, long packet packing, and long packet packing in order. The head short packet packing includes a frame start (FS) in payload. The long packet packing includes a packet header (PH), a payload, and a packet footer (PF) in the payload. The short packet packing includes a CSI-2 ASEP header, a CSI-2 short packet, and CRC. The long packet packing includes a CSI-2 ASEP header, a CSI-2 long packet, and CRC.

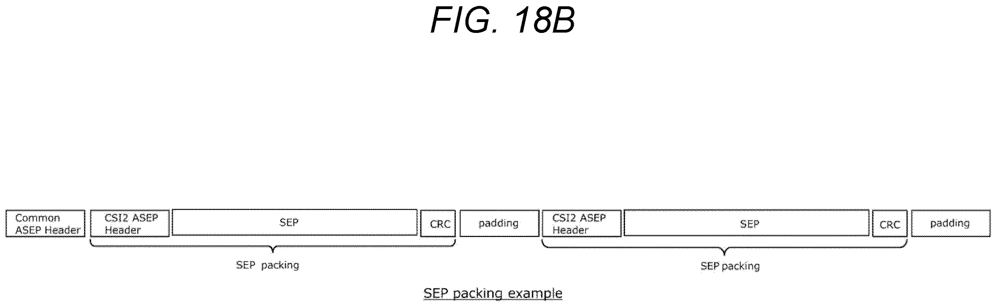

Fig. 18B is a view indicating an example of a structure of the CSI-2 ASEP packet including the SEP CSI-2 packet. Fig. 18B indicates an example in which the SEP CSI-2 packet includes two SEP packings. Each SEP packing includes a CSI-2 ASEP header, an SEP, and a CRC.

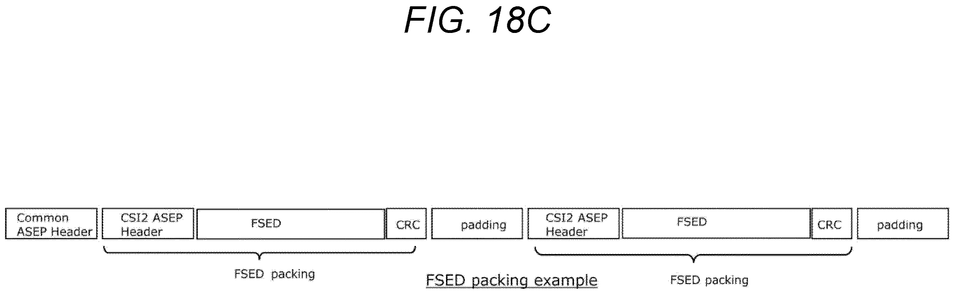

Fig. 18C is a view indicating an example of a structure of the CSI-2 ASEP packet including the FSED CSI-2 packet. Fig. 18C indicates that the FSED CSI-2 packet includes two FSED packings. Each FSED packing includes a CSI-2 ASEP header, an FSED, and a CRC.

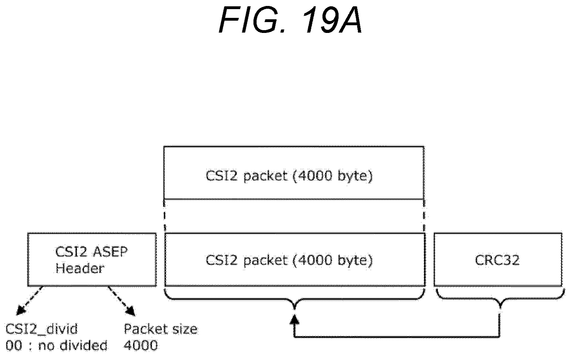

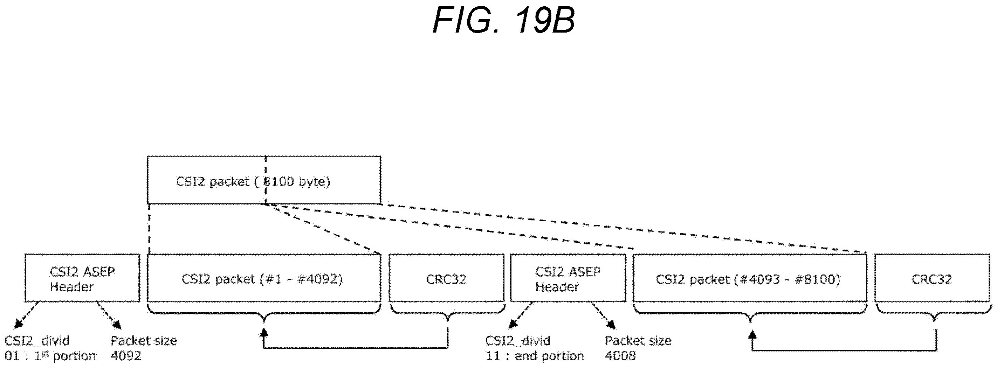

Figs. 19A and 19B are views indicating units in which CRC parity bits are added. Fig. 19A indicates an example in which the CSI-2 packet is 4000 bytes. In this case, a CRC32 parity bit is added to the entire CSI-2 packet.

Fig. 19B indicates an example in which the CSI-2 packet is 8100 bytes. In this case, the packet is divided into a divided packet including 1 to 4092 bytes and a divided packet including 4093 to 8100 bytes. A CRC32 parity bit is added to each divided packet.

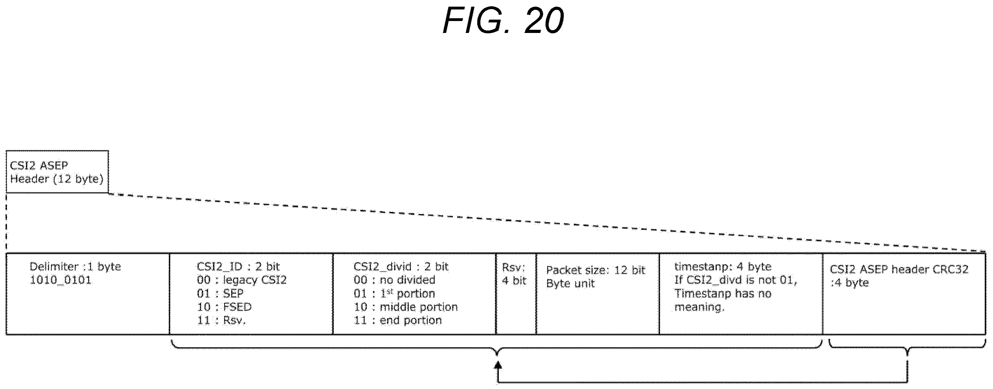

Fig. 20 is a view indicating a modification of the CSI-2 ASEP header indicated in Fig. 13. Part of a bit configuration of the CSI-2 ASEP header in Fig. 20 is different from that in Fig. 13. The CSI-2 ASEP header in Fig. 20 includes a delimiter having a 1-byte length, a CSI2_ID having a 2-bit length, a CSI2_divid having a 2-bit length, a reserve having a 4-bit length, a packet size having a 12-bit length, a timestamp having a 4-byte length, and a CRC32 having a 4-byte length.

The CSI2_ID of 00 indicates a legacy CSI2, the CSI2_ID of 01 indicates an SEP, the CSI2_ID of 10 indicates an FSED, and the CSI2_ID of 11 indicates a reserve. The CSI2_divid of 00 indicates no divided, the CSI2_divid of 01 indicates a first divided packet, the CSI2_divid of 10 indicates a middle divided packet, and the CSI2_divid of 11 indicates a last divided packet. The timestamp has no meaning unless it is a first divided packet.

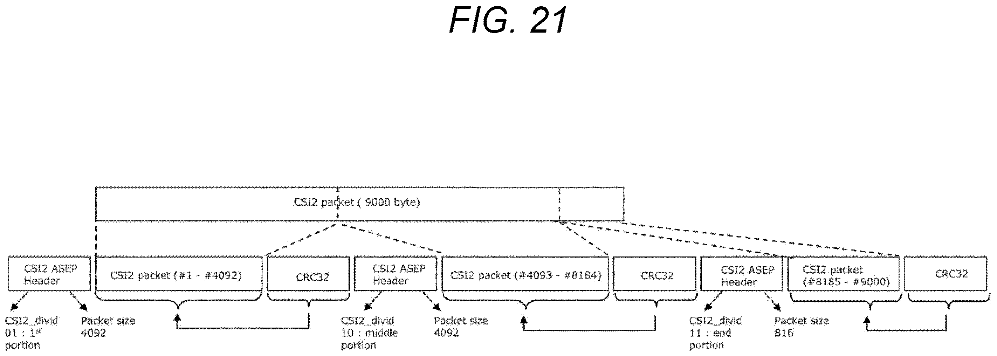

Fig. 21 is a view indicating a structure of the CSI-2 ASEP including the CSI-2 packet of 9000 bytes. The CSI-2 ASEP includes a divided packet including 1 to 4092 bytes of the CSI-2 packet, a divided packet including 4093 to 8184 bytes, and a divided packet including 8185 to 9000 bytes, and a CRC32 parity bit is added to each divided packet.

In addition, a CSI2 ASEP header is provided for each divided packet. In a similar manner to Fig. 20, the CSI2 ASEP header includes a delimiter, a CSI2_ID, a CSI2_divid, a packet size, a timestamp, and a CRC32.

As described above, in the present embodiment, when the CSI-2 packet conforming to the MIPI CSI-2 standards and the CSE standards is transmitted in compliance with the in-vehicle high-speed interface standards ASA ver 1.1, application packets of the same transmission format are generated regardless of the type and structure of the CSI-2 packet. As a result, various types of CSI-2 packets such as the legacy CSI-2, the SEP, and the FSED included in the CSI-2 packet can be efficiently transmitted.

In addition, the long packet length of the CSI-2 packet is divided and transmitted according to error detection capability of the CRC defined by the ASA standards, and thus, the error detection capability is maximized, and reliability of data is improved.

Further, a plurality of CSI-2 packets can be stored in one ASA application packet and transmitted, and thus, an extra buffer memory can become unnecessary, and an effect of improving a data throughput can be expected. In addition, a plurality of pieces of image information can be synchronized, so that application to sensor fusion, and the like, can be expected.

Note that the present technology may have the following configurations.
(1) A communication apparatus including:
   a packet generation unit configured to encapsulate a packet conforming to camera serial interface 2 (CSI-2) standards defined by camera service extensions (CSE) standards of Mobile Industry Processor Interface (MIPI) Alliance without distinguishing a type and a structure of the packet to generate an application packet; and
   a communication unit configured to transmit the application packet to a communication partner apparatus.
(2) The communication apparatus according to (1), in which
   the application packet has the same transmission format regardless of the type and the structure of the packet conforming to the CSI-2 standards.
(3) The communication apparatus according to (1) or (2), in which
   the type of the packet includes a legacy CSI-2 packet in which the CSE is not performed, a service extensions packet (SEP), and a frame-based service extension data (FSED).
(4) The communication apparatus according to any one of (1) to (3), in which
   the structure of the packet includes information indicating that the packet is not divided and information indicating a head, a middle, or an end of a divided packet.
(5) The communication apparatus according to any one of (1) to (4), in which
   the application packet includes a header, a payload, and a cyclic redundancy check (CRC) parity bit.
(6) The communication apparatus according to (5), in which
   the header includes a first indicator indicating start of the packet.
(7) The communication apparatus according to (5) or (6), in which
   the header includes a second indicator indicating that the type of the packet is any of a legacy CSI-2 packet in which the CSE is not performed, an SEP, or an FSED.
(8) The communication apparatus according to any one of (5) to (7), in which
   the application packet includes information indicating a C-PHY or a D-PHY defined in the CSI-2 standards, and
   the header includes a third indicator indicating the C-PHY, the D-PHY, or other physical layer standards.
(9) The communication apparatus according to any one of (5) to (8), in which the header includes a fourth indicator indicating whether the structure of the packet is a structure in which the packet conforming to the CSI-2 standards is not divided or indicating a head, a middle, or an end of a divided packet obtained by dividing the divided packet.
(10) The communication apparatus according to any one of (5) to (9), in which
   the header includes a fifth indicator indicating a size of the application packet.
(11) The communication apparatus according to any one of (5) to (10), in which
   the header includes a sixth indicator indicating a timestamp indicating time at which the application packet is generated.
(12) The communication apparatus according to any one of (5) to (11), in which
   the header includes a seventh indicator indicating a CRC parity bit for verifying information regarding the header.
(13) The communication apparatus according to any one of (5) to (12), in which
   the payload includes a short packet not including a payload body or a long packet including the payload body.
(14) The communication apparatus according to (13), in which
   the payload includes the short packet or the long packet for a legacy CSI-2 packet, the short packet or the long packet for an SEP, or the short packet or the long packet for an FSED.
(15) The communication apparatus according to (13) or (14), in which
   the CRC parity bit is a parity bit for verifying the payload.
(16) The communication apparatus according to any one of (1) to (15), in which
   the number of bytes that can be transmitted in one application packet is equal to or less than 4096 bytes including the CRC parity bit.
(17) The communication apparatus according to (16), in which the CSI-2 packet exceeding 4092 bytes is transmitted after being divided into two or more application packets each including equal to or less than 4092 bytes.
(18) A communication apparatus including:
   a communication unit configured to receive, from a communication partner apparatus, an application packet generated by encapsulating a packet conforming to camera serial interface 2 (CSI-2) standards defined by camera service extensions (CSE) standards of Mobile Industry Processor Interface (MIPI) Alliance without distinguishing a type and a structure of the packet; and
   a packet decomposition unit configured to extract the packet conforming to the CSI-2 standards from the application packet.
(19) A communication system including:
   a first communication apparatus; and
   a second communication apparatus configured to alternately transmit and receive information to and from the first communication apparatus within a period allocated by a time division duplex (TDD) communication scheme,
   the first communication apparatus including
   a packet generation unit configured to encapsulate a packet conforming to camera serial interface 2 (CSI-2) standards defined by camera service extensions (CSE) standards of Mobile Industry Processor Interface (MIPI) Alliance without distinguishing a type and a structure of the packet to generate an application packet, and
   a first communication unit configured to transmit the application packet to a communication partner apparatus,
   the second communication apparatus including
   a second communication unit configured to receive the application packet from the first communication unit, and
   a packet decomposition unit configured to extract the packet conforming to the CSI-2 standards from the application packet.

Aspects of the present disclosure are not limited to the above-described individual embodiments, but include various modifications that can be conceived by those skilled in the art, and the effects of the present disclosure are not limited to the above-described contents. In other words, various additions, modifications, and partial deletions may be made without departing from the conceptual idea and spirit of the present disclosure derived from the matters defined in the claims and equivalents thereof.

### REFERENCE SIGNS LIST

- 1, 2: SerDes
- 3: ECU
- 4: Camera
- 5: Cable
- 6: Communication system
- 11: Image sensor chip
- 12: ASA bridge chip
- 13: Image sensor array
- 14: CSI-2 encoder
- 15: D/C-PHY Tx
- 16: D/C-PHY Rx
- 17: Protocol converter
- 18: SerDes Tx
- 19: CSE encoder
- 20: Selector
- 21: Video source (application source)
- 22: Video encapsulator (application encapsulator)
- 23: Data link layer
- 24: ASA PHY Tx
- 25: Video signal decoder
- 26: ASA video application signal format encoder

## Claims

1. A communication apparatus comprising:
a packet generation unit configured to encapsulate a packet conforming to camera serial interface 2 (CSI-2) standards defined by camera service extensions (CSE) standards of Mobile Industry Processor Interface (MIPI) Alliance without distinguishing a type and a structure of the packet to generate an application packet; and
a communication unit configured to transmit the application packet to a communication partner apparatus.

2. The communication apparatus according to claim 1, wherein
the application packet has a same transmission format regardless of the type and the structure of the packet conforming to the CSI-2 standards.

3. The communication apparatus according to claim 1, wherein
the type of the packet includes a legacy CSI-2 packet in which the CSE is not performed, a service extensions packet (SEP), and a frame-based service extension data (FSED).

4. The communication apparatus according to claim 1, wherein
the structure of the packet includes information indicating that the packet is not divided and information indicating a head, a middle, or an end of a divided packet.

5. The communication apparatus according to claim 1, wherein
the application packet includes a header, a payload, and a cyclic redundancy check (CRC) parity bit.

6. The communication apparatus according to claim 5, wherein
the header includes a first indicator indicating start of the packet.

7. The communication apparatus according to claim 5, wherein
the header includes a second indicator indicating that the type of the packet is any of a legacy CSI-2 packet in which the CSE is not performed, an SEP, or an FSED.

8. The communication apparatus according to claim 5, wherein
the application packet includes information indicating a C-PHY or a D-PHY defined in the CSI-2 standards, and
the header includes a third indicator indicating the C-PHY, the D-PHY, or other physical layer standards.

9. The communication apparatus according to claim 5, wherein
the header includes a fourth indicator indicating whether the structure of the packet is a structure in which the packet conforming to the CSI-2 standards is not divided or indicating a head, a middle, or an end of a divided packet obtained by dividing the packet.

10. The communication apparatus according to claim 5, wherein
the header includes a fifth indicator indicating a size of the application packet.

11. The communication apparatus according to claim 5, wherein
the header includes a sixth indicator indicating a timestamp indicating time at which the application packet is generated.

12. The communication apparatus according to claim 5, wherein
the header includes a seventh indicator indicating a CRC parity bit for verifying information regarding the header.

13. The communication apparatus according to claim 5, wherein
the payload includes a short packet not including a payload body or a long packet including the payload body.

14. The communication apparatus according to claim 13, wherein
the payload includes the short packet or the long packet for a legacy CSI-2 packet, the short packet or the long packet for an SEP, or the short packet or the long packet for an FSED.

15. The communication apparatus according to claim 13, wherein
the CRC parity bit is a parity bit for verifying the payload.

16. The communication apparatus according to claim 5, wherein
the number of bytes that can be transmitted in one application packet is equal to or less than 4096 bytes including the CRC parity bit.

17. The communication apparatus according to claim 16, wherein
the CSI-2 packet exceeding 4092 bytes is transmitted after being divided into two or more application packets each including equal to or less than 4092 bytes.

18. A communication apparatus comprising:
a communication unit configured to receive, from a communication partner apparatus, an application packet generated by encapsulating a packet conforming to camera serial interface 2 (CSI-2) standards defined by camera service extensions (CSE) standards of Mobile Industry Processor Interface (MIPI) Alliance without distinguishing a type and a structure of the packet; and
a packet decomposition unit configured to extract the packet conforming to the CSI-2 standards from the application packet.

19. A communication system comprising:
a first communication apparatus; and
a second communication apparatus configured to alternately transmit and receive information to and from the first communication apparatus within a period allocated by a time division duplex (TDD) communication scheme,
the first communication apparatus including
a packet generation unit configured to encapsulate a packet conforming to camera serial interface 2 (CSI-2) standards defined by camera service extensions (CSE) standards of Mobile Industry Processor Interface (MIPI) Alliance without distinguishing a type and a structure of the packet to generate an application packet, and
a first communication unit configured to transmit the application packet to a communication partner apparatus,
the second communication apparatus including
a second communication unit configured to receive the application packet from the first communication unit, and
a packet decomposition unit configured to extract the packet conforming to the CSI-2 standards from the application packet.
